Europäisches Patentamt

European Patent Office

Office européen des brevets

(11) Veröffentlichungsnummer: **0 443 325 A1**

## EUROPÄISCHE PATENTANMELDUNG

(21) Anmeldenummer: **91100572.6**

(51) Int. Cl.5: **A01B 71/06**

(22) Anmeldetag: **18.01.91**

(30) Priorität: **19.01.90 DE 4001398**

(43) Veröffentlichungstag der Anmeldung:
**28.08.91 Patentblatt 91/35**

(84) Benannte Vertragsstaaten:
**BE DE ES FR GB**

(71) Anmelder: **Klöckner-Humboldt-Deutz Aktiengesellschaft Deutz-Mülheimer-Strasse 111 Postfach 80 05 09 W-5000 Köln 80(DE)**

(72) Erfinder: **Jenrich, Reinhard, Dipl.-Ing.**
**Torfweg 15**
**W-5000 Köln 90(DE)**
Erfinder: **Hellenbrand, Ferdinand, Dipl.-Ing.**
**Sandkaule 40**
**W-5202 St. Augustin 1(DE)**

(54) **Zapfwellenkupplung für Traktoren.**

(57) Die Erfindung betrifft eine Zapfwellenkupplung an einem Landfahrzeug, insbesondere Traktor, welche zwischen dem Leistungsstrang eines Antriebsmotors und einem zum Antrieb von Anbaugeräten dienenden Zapfwellenstummel (1) angeordnet ist, wobei ein Ein- bzw. Ausrücken der Zapfwellenkupplung (2) über eine von einer Pumpe (3) geförderte Hydraulikflüssigkeit und ein willkürlich betätigbares Steuerventil (4) erfolgt.

Der Erfindung liegt die Aufgabe zugrunde, in der Zapfwellenkupplung, im Antriebsstrang des Motors und an der Zapfwelle kritische Betriebszustände zu vermeiden, so daß es zu keinem erhöhten Verschleiß oder sogar zur Zerstörung der Zapfwellenkupplung kommen kann.

Erfindungsgemäß wird dies dadurch gelöst, daß eine Elektronik-Auswerteeinheit (5) fahrzeugspezifische Werte über Sensoren erfaßt, auswertet und das Steuerventil (4) zusätzlich in Abhängigkeit von vorgegebenen Grenzwerten betätigt.

## ZAPFWELLENKUPPLUNG FÜR TRAKTOREN

Die Erfindung betrifft eine Zapfwellenkupplung nach dem Oberbegriff des Anspruchs 1.

Aus der Schulungsunterlage 02986235 (1984) für den Traktor DX 8.30 der Klöckner-Humboldt-Deutz AG, Deutz-Mülheimer-Straße 111, 5000 Köln 80, ist auf den Seiten 36 bis 38 eine Zapfwellenkupplung gezeigt, welche zwischen dem Leistungsstrang eines Antriebsmotors und einem zum Antrieb von Anbaugeräten dienenden Zapfwellenstummel angeordnet ist. Diese Zapfwellenkupplung ist hydraulisch ein- bzw. auskuppelbar. Eine Hydraulikpumpe fördert hierbei eine Hydraulikflüssigkeit über ein Steuerventil zur Zapfwellenkupplung. Ist das Steuerventil geöffnet, so ist die Zapfwellenkupplung mit der Hydraulikflüssigkeit beaufschlagt und eingekuppelt. Das Steuerventil ist über einen Schalter betätigbar.

Ein Nachteil dieser bekannten Zapfwellenkupplung tritt bei einer Überlastung durch ein zu hohes Abtriebsmoment und ein Abfallen des Steuerdruckes auf, da diese Überlastung zu einem Schlupf in der Zapfwellenkupplung führt, welcher zu erhöhtem Verschleiß und schließlich zur Zerstörung der Zapfwellenkupplung sowie der im Kraftfluß befindlichen Anbaugeräte führen kann.

Ferner kommt es bei niedriger Drehzahl des Motors und eingerückter Zapfwellenkupplung oft zu starken Torsionsschwingungen im gesamten Antriebsstrang, was zu unerwünschten Geräuschen und zu Schädigungen der Zahnflanken führen kann.

Ein weiterer Nachteil ist, daß es bei plötzlichen kritischen Betriebsbedingungen des Anbaugerätes über die eingerückte Zapfwellenkupplung zu Schäden am Antriebsstrang und am Anbaugerät kommen kann. Dies ist besonders dann der Fall, wenn das Anbaugerät bzw. eine hydraulische Hubvorrichtung plötzlich vertikal ausgelenkt wird.

Der Erfindung liegt die Aufgabe zugrunde, eine Zapfwellenkupplung nach dem Oberbegriff des Anspruchs 1 derart weiterzubilden, daß in der Zapfwellenkupplung, im Antriebsstrang des Motors und an der Zapfwelle kritische Betriebszustände vermieden werden und es zu keinem erhöhten Verschleiß oder sogar zur Zerstörung der Zapfwellenkupplung kommen kann.

Erfindungsgemäß wird dies durch die kennzeichnenden Merkmale des Patentanspruchs 1 gelöst.

Dadurch, daß eine Elektronik-Auswerteeinheit fahrzeugspezifische Werte über Sensoren erfaßt, auswertet und das Steuerventil zusätzlich in Abhängigkeit von vorgegebenen Grenzwerten betätigt, werden in der Zapfwellenkupplung, im Antriebsstrang des Motors und an der Zapfwelle kritische Betriebszustände vermieden und es kommt zu keinem erhöhten Verschleiß oder sogar zur Zerstörung der Zapfwellenkupplung.

Erfindungsgemäß erfaßt ein Sensor motorspezifische Werte wie Drehzahl oder Drehmoment. Sinkt die Drehzahl des Motors unter einen Grenzwert von z.B. 1200 U/min, so wird die Zapfwellenkupplung durch die Elektronik-Auswerteeinheit geöffnet. Steigt die Drehzahl wieder über diesen vorgegebenen Grenzwert, so wird die Zapfwellenkupplung wieder über die Elektronik-Auswerteeinheit eingekuppelt.

In einer besonders vorteilhaften Ausführungsform greifen Sensoren die Drehzahl des Zapfwellenkupplungseingangs und -ausgangs ab und die Elektronik-Auswerteeinheit vergleicht diese beiden Werte unter Berücksichtigung des Übersetzungsverhältnisses der Zapfwellenkupplung zur Ermittlung des Schlupfes. Übersteigt der Schlupf einen vorgegebenen Wert, so schaltet auch in diesem Fall die Elektronik-Auswerteeinheit die Zapfwellenkupplung über das Steuerventil aus. Fällt der Schlupf wieder ab, so schaltet die Elektronik-Auswerteeinheit die Zapfwellenkupplung wieder ein, falls vom Fahrer nicht willkürlich die Zapfwellenkupplung ausgeschaltet wird.

In einer weiteren erfindungsgemäßen Ausführungsform greifen Sensoren Drehschwingungen am Zapfwellenkupplungseingang und/oder -ausgang ab. Hierdurch wird auch bei erhöhten Drehschwingungen die Zapfwellenkupplung ausgekuppelt.

Da zapfwellengetriebene Anbaugeräte in der Regel in der hydraulischen Hubvorrichtung gefahren werden, greift vorteilhafterweise ein Sensor ein der Höhenauslenkung dieser hydraulischen Hubvorrichtung proportionales Signal ab. Übersteigt die Höhenauslenkung der hydraulischen Hubvorrichtung einen vorgegebenen Grenzwert, so schaltet die Elektronik-Auswerteeinheit die Zapfwellenkupplung ab, wodurch unter anderem die Arbeitssicherheit von Traktor und Anbaugerät wesentlich verbessert ist.

In bevorzugter Ausführungsform ist das Steuerventil ein Proportionalventil und die Elektronik-Auswerteeinheit steuert das Steuerventil getaktet an. Hierdurch erübrigt sich ein Relais zur Steuerung des Steuerventils. Ferner kann das Steuerventil kontinuierlich die Zapfwellenkupplung ein- bzw. ausschalten.

In weiterer bevorzugter Ausführungsform hält bei Unterschreiten eines Grenzwertes für den Schlupf, über einen vorgegebenen Mindestzeitraum hinaus, die Elektronik-Auswerteeinheit die Zapfwellenkupplung über das Steuerventil dauerhaft ausgekuppelt. Die Zapfwellenkupplung kann dann erst wieder durch ein Signal von außen betätigt werden.

Vorteilhafterweise erfolgt der Anfahrvorgang der Zapfwellenkupplung nach einer vorgegebenen Kennlinie, die in der Elektronik-Auswerteeinheit gespeichert ist. Durch dieses elektronisch geregelte Anfahren und rechtzeitige Ausschalten der Zapfwellenkupplung wird der gesamte Antriebsstrang des Traktors und auch des Anbaugerätes wesentlich weniger durch Stöße und Schläge belastet, was der Lebensdauer zugute kommt. Eine Überlastung kann nicht mehr stattfinden, kapitale Schäden am Zapfwellenstrang werden weitgehend verhindert.

Zur Information des Fahrers zeigt vorteilhafterweise eine Anzeigevorrichtung den Schaltzustand der Zapfwellenkupplung an.

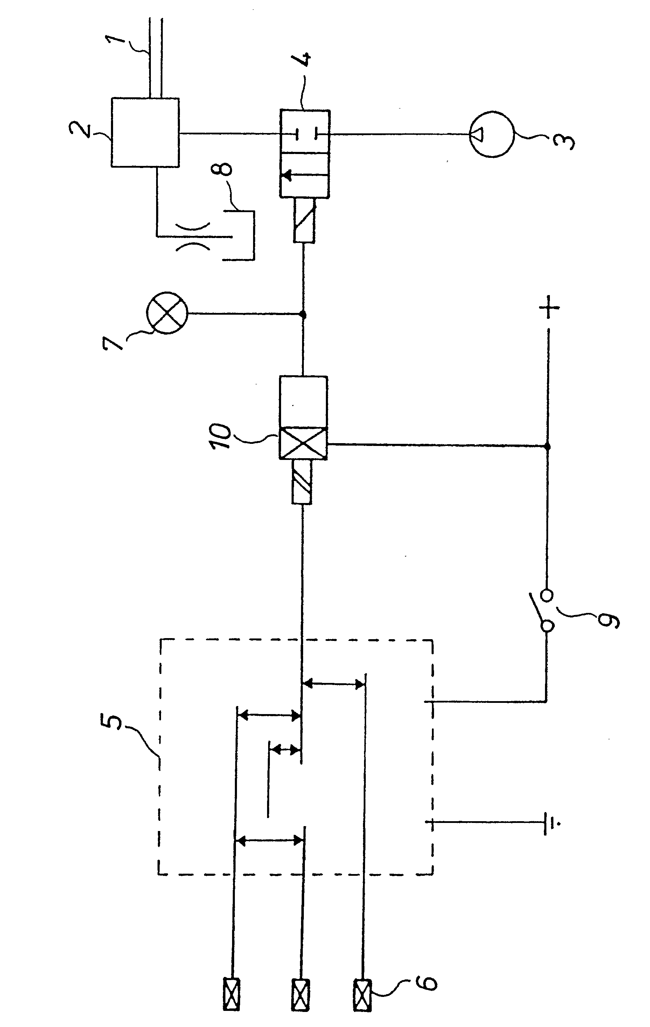

Weitere Merkmale der Erfindung ergeben sich aus der Beschreibung und der Zeichnung, die im folgenden näher erklärt wird.

Mit 2 ist eine Zapfwellenkupplung bezeichnet, die hydraulisch schaltbar ist. Die Zapfwellenkupplung 2 ist zwischen dem Leistungsstrang eines Antriebsmotors (nicht gezeigt) und einem zum Antrieb von Anbaugeräten dienenden Zapfwellenstummel 1 angeordnet. Ein Ein- bzw. Ausrücken der Zapfwellenkupplung 2 erfolgt über eine von einer Pumpe 3 geförderte Hydraulikflüssigkeit. In der Hydraulikleitung ist zwischen Hydraulikpumpe 3 und Zapfwellenkupplung 2 ein Steuerventil 4 angeordnet. Zur Absteuerung der Hydraulikflüssigkeit führt diese in Strömungsrichtung hinter der Zapfwellenkupplung z.B. in ein Reservoir 8. Geschaltet wird das Steuerventil 4 über ein Relais 10, welches vom Fahrer über einen Schalter 9 willkürlich betätigt werden kann. Zur Anzeige des Schaltzustandes der Zapfwellenkupplung 2 ist hinter dem Relais eine Anzeigevorrichtung 7, z.B. eine Lampe angeordnet.

Zwischen dem Schalter 9 und dem Relais 10 ist eine Elektronik-Auswerteeinheit 5 angeordnet, an die Sensoren 6 angeschlossen sind. Diese Sensoren 6 greifen fahrzeugspezifische Werte auf und leiten sie der Elektronik-Auswerteeinheit zu, welche diese Werte auswertet und das Steuerventil 4 zusätzlich in Abhängigkeit von vorgegebenen Grenzwerten betätigt. Die Elektronik-Auswerteeinheit 5 dient hierbei zur Sicherung des Antriebsstranges des Motors, der Zapfwellenkupplung und der Zapfwelle, da sie bei kritischen fahrzeugspezifischen Werten die Zapfwellenkupplung über das Steuerventil 4 zumindest zeitweilig auskuppelt. Desgleichen wird auch der Anfahrvorgang der Zapfwellenkupplung durch die Elektronik-Auswerteeinheit gesteuert.

Welche fahrzeugspezifischen Werte zur Steuerung der Zapfwellenkupplung eingesetzt werden, hängt vom jeweiligen Einsatzfall ab. Es hat sich als vorteilhaft herausgestellt, drei Sensoren 6 zu verwenden. Dieser Fall ist in der Zeichnung dargestellt. Ein Sensor 6 greift hierbei die Drehzahl des Motors ab, ein anderer Sensor die Zapfwellendrehzahl und ein dritter Sensor ein der Höhenauslenkung einer hydraulischen Hubvorrichtung proportionales Signal. Eine solche hydraulische Hubvorrichtung ist üblicherweise an einem Traktor in der Nähe des Zapfwellenstummels 1 angeordnet und dient zur Anhängung des anzutreibenden Geräts.

Die am Motor abgegriffene Drehzahl wird nach Betätigen des Schalters 9 und damit manuellem Einschalten der Zapfwellenkupplung, ständig von der Elektronik-Auswerteeinheit mit der Zapfwellendrehzahl verglichen. Hierbei berücksichtigt vorteilhafterweise die Elektronik-Auswerteeinheit das Übersetzungsverhältnis der Zapfwellenkupplung. Aus dem Vergleich dieser beiden Drehzahlwerte ergibt sich der Schlupf. Wenn während des Betriebes Schlupf in der Zapfwellenkupplung auftritt, d.h. eine Drehzahldifferenz zwischen Motor und Zapfwelle, wird das Relais 10 so angesteuert, daß es den Steuerstrom zum Steuerventil 4 unterbricht und die Kupplung öffnet. Es wird hier in der Beschreibung davon ausgegangen, daß die Zapfwellenkupplung bei Beaufschlagung durch die Hydraulikflüssigkeit geschlossen ist. Es kann jedoch auch der umgekehrte Fall genutzt werden, daß die Zapfwellenkupplung geschlossen ist, wenn sie nicht mit der Hydraulikflüssigkeit beaufschlagt ist.

Fällt der Schlupf wieder unter einen vorgegebenen Grenzwert, steuert die Elektronik-Auswerteeinheit die Zapfwellenkupplung über das Steuerventil 4 so, daß diese geschlossen wird. Bei Unterschreiten des Schlupf-Grenzwertes über einen vorgegebenen Mindestzeitraum hinaus hält die Elektronik-Auswerteeinheit 5 die Zapfwellenkupplung 2 über das Steuerventil 4 dauerhaft ausgekuppelt. Zum erneuten Anfahren der Zapfwelle muß der Fahrer dann den Schalter 9 erneut betätigen.

Es kann auch sinnvoll sein, das Relais 10 zu streichen und das Steuerventil 4 als ein einfaches Schwarz-Weiß-Ventil auszubilden, welches als Vorsteuerventil für das eigentliche Zapfwellen-Steuergerät (nicht gezeichnet) dient. Vorteilhafter ist es jedoch, das Steuerventil 4 als Proportionalventil auszubilden.

Sinkt die Motordrehzahl unter einen Grenzwert von z.B. 1200 U/min, so öffnet gleichfalls die Elektronik-Auswerteeinheit die Zapfwellenkupplung. Stellt der Fahrer den Schalter 9 nicht aus, weil z.B. die Arbeit beendet ist, wird der Anfahrvorgang - siehe oben - innerhalb eines vorgegebenen Zeitlimits automatisch nach Überschreiten der Grenzdrehzahl wiederholt.

Der dritte Sensor dient - wie schon erwähnt - zur Messung der Höhenauslenkung einer hydraulischen Hubvorrichtung, die die antriebenen Geräte aufnimmt. Überschreitet auch dieser Wert einen vorgegebenen Grenzwert, so wird gleichfalls die Zapfwellenkupplung ausgekuppelt. Dies ist besonders wichtig, da die Kinematik der Gelenkwelle - dies ist die Verbindung zwischen der Zapfwelle und dem Anbaugerät - nur geringe Winkeländerungen, d.h. Änderungen der Arbeitshöhe des Anbaugerätes, zuläßt, da die Drehbewegung sonst sehr ungleichförmig wird und die Welle zu schlagen beginnt. Schäden am Antriebsstrang und am Anbaugerät sind die Folge.

**Patentansprüche**

1. Zapfwellenkupplung an einem Landfahrzeug, insbesondere Traktor, welche zwischen dem Leistungsstrang eines Antriebsmotors und einem zum Antrieb von Anbaugeräten dienenden Zapfwellenstummel (1) angeordnet ist, wobei ein Ein- bzw. Ausrücken der Zapfwellenkupplung (2) über eine von einer Pumpe (3) geförderte Hydraulikflüssigkeit und ein willkürlich betätigbares Steuerventil (4) erfolgt, gekennzeichnet durch eine Elektronik-Auswerteeinheit (5), die fahrzeugspezifische Werte über Sensoren (6) erfaßt, auswertet und das Steuerventil (4) zusätzlich in Abhängigkeit von vorgegebenen Grenzwerten betätigt.

2. Zapfwellenkupplung nach Anspruch 1, dadurch gekennzeichnet, daß ein Sensor (6) motorspezifische Werte wie Drehzahl oder Drehmoment erfaßt.

3. Zapfwellenkupplung nach Anspruch 1 oder 2, dadurch gekennzeichnet, daß Sensoren (6) die Drehzahl des Zapfwellenkupplungseinganges und -ausganges abgreifen und die Elektronik-Auswerteeinheit (5) diese beiden Werte unter Berücksichtigung des Übersetzungsverhältnisses der Zapfwellenkupplung (2) zur Ermittlung des Schlupfes vergleicht.

4. Zapfwellenkupplung nach einem der Ansprüche 1 bis 3, dadurch gekennzeichnet, daß Sensoren (6) Drehschwingungen am Zapfwellenkupplungseingang und/oder -ausgang abgreifen.

5. Zapfwellenkupplung nach einem der Ansprüche 1 bis 4 in Verbindung mit einer hydraulischen Hubvorrichtung, dadurch gekennzeichnet, daß ein Sensor (6) ein der Höhenauslenkung der hydraulischen Hubvorrichtung proportionales Signal abgreift.

6. Zapfwellenkupplung nach einem der Ansprüche 1 bis 5, dadurch gekennzeichnet, daß das Steuerventil (4) ein Proportionalventil ist und die Elektronik-Auswerteeinheit (5) das Steuerventil (4) getaktet ansteuert.

7. Zapfwellenkupplung nach einem der Ansprüche 1 bis 6, dadurch gekennzeichnet, daß beim Unterschreiten eines Grenzwertes über einen vorgegebenen Mindestzeitraum hinaus die Elektronik-Auswerteeinheit (5) die zapfwellenkupplung (2) über das Steuerventil (4) dauerhaft ausgekuppelt hält.

8. Zapfwellenkupplung nach einem der Ansprüche 1 bis 7, dadurch gekennzeichnet , daß der Anfahrvorgang nach einer vorgegebenen Kennlinie, die in der Elektronik-Auswerteeinheit (5) gespeichert ist, erfolgt.

9. Zapfwellenkupplung nach einem der Ansprüche 1 bis 8, dadurch gekennzeichnet, daß eine Anzeigevorrichtung (7) den Schaltzustand der Zapfwellenkupplung (2) anzeigt.

| Europäisches Patentamt | EUROPÄISCHER RECHERCHENBERICHT | Nummer der Anmeldung |
|---|---|---|
| | | EP 91 10 0572 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2 156 754 (DANA CORP.)<br>* Seite 1, Zeilen 56-70,83-90; Abbildung 1 * | 1,2,9 | A 01 B 71/06 |
| Y | | 3,5,6,8 | |
| | — — — | | |
| Y | EP-A-0 167 681 (DEERE & CO.)<br>* Seiten 4-6 * | 3,5,6,8 | |
| | — — — | | |
| A | EP-A-0 175 916 (ROBERT BOSCH GmbH)<br>* Seite 2, Zeile 22 - Seite 3, Zeile 15; Abbildung 1 * | 1,2 | |
| | — — — — — | | |
| | | | RECHERCHIERTE SACHGEBIETE (Int. Cl.5) |
| | | | B 60 K<br>A 01 B<br>A 01 D |

Der vorliegende Recherchenbericht wurde für alle Patentansprüche erstellt

| Recherchenort | Abschlußdatum der Recherche | Prüfer |
|---|---|---|
| Den Haag | 29 Mai 91 | ECCETTO M. |